(19) Europäisches Patentamt
European Patent Office
Office européen des brevets

(11) Numéro de publication: **0 016 292**
**A1**

# (12) DEMANDE DE BREVET EUROPEEN

(21) Numéro de depôt: **79400618.9**

(22) Date de dépôt: **05.09.79**

(51) Int. Cl.$^3$: **A 23 C 19/08**
A 23 C 9/146

(30) Priorité: **28.02.79 FR 7905247**

(43) Date de publication de la demande:
**01.10.80 Bulletin 80/20**

(84) Etats Contractants Désignés:
**BE DE GB IT LU NL**

(71) Demandeur: **FROMAGERIES BEL**
**4, rue d'Anjou**
**F-75008 Paris(FR)**

(72) Inventeur: **Arnaud, Michel**
**7 rue de Normandie**
**F-41100 Vendome(FR)**

(72) Inventeur: **Chambon, Michel**
**7 allée du Maine**
**F-41100 Vendome(FR)**

(72) Inventeur: **Guiraud, Richard**
**24 rue du Docteur Fernand Vialle Bouquet**
**F-19100 Brive la Gaillarde(FR)**

(72) Inventeur: **Guillet, Nicole**
**5, rue de la Perchaie**
**F-41100 Vendome(FR)**

(74) Mandataire: **Fruchard, Guy et al,**
**CABINET CHEREAU Maximilianstrasse 15**
**D-8000 München 22(DE)**

## (54) Procédé de préparation de produits laitiers destinés à la fabrication de fromages fondus, et nouveaux produits ainsi obtenus.

(57) Dans ce procédé, on soumet des matières premières, telles que le lait entier, le lait écrémé, le lactosérum, le babeurre, le fromage et des concentrés protéiques, à un échange d'ions pour abaisser leur concentration en cations divalents qui sont remplacés par des cations monovalents tels que $K^+$, $Na^+$, $NH_4^+$, ou $H^+$, le cation divalent est notamment le calcium et l'échange d'ions est réalisé soit par percolation de la matière première sur une colonne contenant une résine échangeuse de cations, soit dans une cuve contenant une resine en discontinu, dans des conditions de temperature et de pH souhaitees

La presente invention est particulièrement utile pour fournir un procédé de préparation de produits laitiers destinés à la fabrication de fromages fondus, leur introduction dans ces fromages permettant d'abaisser ou de supprimer l'addition de sels de fonte.

EP 0 016 292 A1

La présente invention se rapporte au domaine des produits alimentaires et, plus particulièrement, à la préparation de produits laitiers pour la fabrication de fromages fondus.

Les produits laitiers obtenus ont des propriétés spéciales du fait que leur concentration en cations divalents, et notamment en calcium, est fortement abaissée.

On sait que les cations divalents, et notamment le calcium dont les 2/3 se présentent dans le lait sous la forme de phosphate tricalcique, associé à la caséine, confèrent au lait des propriétés spécifiques et, notamment, permettent sa coagulation sous l'action d'enzymes protéolytiques telles que la présure animale ou microbienne. C'est grâce au calcium que la caséine se trouve sous un état micellaire, permettant de séparer la caséine par sédimentation lorsque la concentration en calcium s'approche de 0,08-0,10M. Si on réduit la teneur en calcium, on observe une dissociation des micelles, ce qu'on peut aussi obtenir si on complexe ou insolubilise le calcium.

Le calcium a un rôle fondamental en fromagerie car il est indispensable à la coagulation de la caséine mais sa teneur élevée dans le lait peut présenter certains inconvénients. C'est particulièrement le cas pour des laits maternisés ou des laits en poudre utilisés avec du café ou du thé. C'est pourquoi on a mis au point des laits maternisés à faible teneur en calcium, tels qu'indiqués dans les brevets français n° 1.246.237 et n° 1.315.025. Ainsi, dans le brevet français n° 1.246.237, on fabrique un aliment à base de lait de vache pour nourrissons, enfants et malades, en modifiant la teneur en calcium du lait de vache sans modifier le reste de sa composition saline, avant sa dilution et dans une mesure telle que le filtrat dilué à environ 2/3 de ce produit présente, comme le lait de femme, la propriété de cailler en pénétrant dans l'estomac.

Dans le brevet français n° 1.315.025, on fabrique un aliment pour nourrissons identique au lait de femme, en utilisant du petit lait traité dans un échangeur d'ions, puis on ajoute un lait écrémé traité par fermentation avec une enzyme protéolytique et on mélange une graisse, notamment de la crème de lait ou des graines de coton.

On a également mis au point des laits en poudre partiellement décalcifiés, destinés à être employés avec des boissons chaudes, tel qu'indiqué dans le brevet français n° 1.303.899, dans lequel on prépare un lait en poudre, pauvre en calcium et en phosphore, à partir de lait écrémé en précipitant le phosphocaséinate de calcium avec une enzyme protéolytique, en séparant le sérum, en mettant le phosphocaséinate de calcium en suspension dans l'eau, en ajoutant de l'acide jusqu'à atteindre un pH de 4,5, en isolant la caséine et en la dispersant dans le sérum.

Dans les trois brevets cités, la teneur élevée du lait de vache en calcium entraîne une irréversibilité de la coagulation après l'action du suc gastrique et, en outre, une coagulation trop rapide du produit en présence d'un liquide chaud.

En fromagerie, l'abaissement de la teneur en calcium du lait peut présenter certains avantages. Par exemple,dans le brevet français n° 1.188.446, on a mis au point des produits laitiers applicables en fromagerie dans lesquels un milieu lacté, utilisé pour préparer ces produits, comprend le produit obtenu par contact du lait avec une matière échangeuse d'ions pour réduire sa teneur en calcium.

Il s'agit d'un milieu de culture de ferments lactiques résistant au bactériophage, capable d'inhiber l'action du bactériophage sans effets toxiques sur les organismes producteurs d'acide lactique.

Dans la demande de brevet français n° 69/14483, publiée sous le n° 2.080.830, on fabrique en continu du fromage frais conservable en abaissant la concentration en cations divalents par échange d'ions puis on concentre le lait jusqu'à environ 44 % de teneur en matière sèche, on ajoute des cultures bactériennes acidifiantes ou des acides alimentaires et on conditionne la masse. Ce procédé permet l'abaissement de la teneur en cendres du fromage sans avoir recours à l'égouttage. Egalement, dans la demande de brevet français n° 73/31659, publiée sous le n° 2.197.521, on prépare un produit laitier pouvant donner par coagulation, un produit coagulé de protéines à teneur réduite en calcium, en soumettant un milieu aqueux contenant de la caséine

dispersée à teneur réduite en calcium, en soumettant un milieu aqueux contenant de la caséine dispersée à une filtration sur membrane en milieu acide, la caséine restant à l'état non précipité.

Tous ces différents brevets concernent un procédé de décalcification en fromagerie classique mais ce procédé présente aussi un intérêt fondamental dans un autre domaine, celui de la fabrication des fromages fondus.

Dans la fabrication du fromage fondu, on procède à une "capture" du calcium présent dans la matière première, notamment les fromages, par des sels de "fonte" agissant comme échangeurs d'ions, permettant le remplacement de l'ion calcium, par d'autres ions notamment des ions sodium, potassium, etc... En effet, dans la fabrication du fromages fondu, il est absolument nécessaire de complexer le calcium présent dans le fromage (ce calcium donne sa structure rigide au fromage) afin que le produit ne conserve plus sa structure et "fonde" facilement. Pour complexer le calcium, on emploie des composés chimiques, notamment des polyphosphates de sodium et de potassium, agissant comme échangeurs d'ions en substituant des ions Na et K, par exemple, aux ions Ca du fromage.

Ainsi, dans la mesure où la matière première serait déjà partiellement ou totalement décalcifiée, on pourrait supprimer partiellement ou totalement ces sels de "fonte". Il faut noter, de plus, que le niveau de concentration en calcium dans le fromage fondu, niveau qui dépend du choix des matières premières joue un rôle important dans le procédé de fonte, aussi bien sur le plan quantitatif (rapport Ca/extrait sec dégraissé) que qualitatif (rapport Ca lié/Ca libre), ce qui agit sur la quantité de sels de "fonte" à employer.

Un objet de la présente invention est donc de réduire ou de supprimer l'emploi de sels de "fonte" lors de la préparation de fromages fondus.

Un autre objet de la présente invention est de mettre au point des matières premières décalcifiées (laits, fromages, concentrés protéiques) pour la fabrication de fromages fondus.

D'autres objets apparaîtront d'après la description suivante de la présente invention. Ces objets sont maintenant atteints par la prévision d'un procédé de préparation de produits laitiers destinés à la fabrication des fromages fondus, caractérisé en ce qu'on soumet des matières premières à un échange d'ions pour abaisser leur concentration en cations divalents, ces cations divalents étant remplacés par des cations monovalents.

Dans ce procédé, il s'agit donc de remplacer le calcium présent dans la matière première par des cations monovalents, tels que par exemple, $Na^+$, $K^+$, $NH_4^+$, $H^+$, etc., selon la réaction :

$$Ca + 2\ R - X \longrightarrow R_2Ca + 2\ X$$

où R désigne le groupe fonctionnel actif de la résine et X est un cation monovalent, tel que $Na^+$, $K^+$, $NH_4^+$, $H^+$, etc. Les matières premières auxquelles un tel procédé peut être appliqué sont du lait entier, du lait écrémé, du lactosérum, du babeurre, des caillés frais, du fromage, des concentrés protéiques de lait et de lactosérum obtenus par tout moyen de concentration (par exemple un traitement thermique, l'ultrafiltration pour fournir des retentats d'ultrafiltration, la dialyse et la chromatographie préparative), des coprécipités, des caséines, des caséinates, des lactoprotéines et tous les autres produits laitiers servant à la préparation des produits précédents et pouvant être utilisés, notamment,dans la préparation du fromage fondu.

Ces matières premières peuvent être sous forme liquide ou en poudre : c'est notamment le cas du lait, du lait écrémé, du lactosérum et du babeurre.

L'échange d'ions entre les cations divalents, notamment le calcium, et les cations monovalents peut être effectué selon l'un des deux procédés suivants :

1°) On soumet le produit à décalcifier à une percolation sur une résine échangeuse de cations ; ce procédé peut être réalisé en continu ou en discontinu, et éventuellement sous une pression optimale de 3 bars ; ou

2°) On utilise des cuves, en travaillant de manière discontinue. Dans ce cas, on place la résine dans une cuve et on travaille dans des conditions de températures et de pH souhaitées. Ensuite, on sépare la résine du produit par tout procédé connu de séparation, tel que la filtration, la décantation, etc...

D'autres moyens pourraient être également mis en oeuvre pour réaliser le procédé de la présente invention.

Selon un exemple de mise en oeuvre préféré de la présente invention, on réalise l'échange d'ions dans des cuves, en travaillant à des températures d'environ 2 à 99°C, de préférence d'environ 25 à 50°C le pH étant d'environ 1 à 14, de préférence d'environ 1 à 10. Ceci évite le colmatage des résines dû à la dénaturation des protéines qui précipitent à des températures plus élevées, surtout en milieu acide.

Grâce au procédé de la présente invention, on peut atteindre une décalcification allant jusqu'à environ 99 % et on peut soumettre à la décalcification des produits contenant jusqu'à environ 50 % d'extrait sec.

Le procédé de la présente invention rend ainsi possible la décalcification de tous les produits laitiers utilisés comme matières premières dans la fabrication de fromages fondus et les produits décalcifiés ainsi obtenus sont employés dans la "fonte" de fromages, en réduisant ou même en supprimant l'emploi de sels de "fonte", puisque les matières premières sont déjà partiellement ou totalement décalcifiées.

La présente invention sera maintenant décrite en relation avec les exemples indiqués ci-après, qui ne sont fournis qu'à titre d'illustration et non pas de limitation.

Exemples de préparation de fromages fondus au cheddar

On donnera dans ce qui va suivre une comparaison entre un procédé classique de préparation de fromage fondu au cheddar et le procédé de la présente invention employant du cheddar décalcifié

EXEMPLE 1

(Comparatif)

Fabrication classique

Les matières premières de base ont les caractéristiques indiquées dans le tableau I ci-dessous :

TABLEAU I

| | % d'extrait sec | % de matières grasses (MG) | % de gras/ sec | mg de Ca/ 100 g |
|---|---|---|---|---|
| Cheddar | 65,30 | 34,25 | 52,45 | 920 |
| Beurre | 82,50 | 82,50 | 100 | - |

Une fabrication de fromage fondu est réalisée en préparant tout d'abord un mélange dont la composition est indiquée dans le tableau II ci-dessous.

TABLEAU II

| | Quantité (kg) | kg de matière sèche | kg de MG | g de calcium |
|---|---|---|---|---|
| Cheddar | 94 | 61,38 | 32,20 | 865 |
| Beurre | 6 | 4,95 | 4,95 | - |
| Mélange | 100 | 66,33 | 37,15 | 865 |

A ce mélange sont ajoutés :

- 3 kg de sels de fonte (polyphosphates)
- 20,8 kg d'eau

La fonte est alors effectuée, ce qui donne un produit ayant les caractéristiques suivantes :

- % d'extrait sec : 56
- % de gras/sec : 53,6

0016292

EXEMPLE 2

Fabrication avec du cheddar décalcifié

Le cheddar employé dans la fabrication classique est partiellement dégraissé, puis mis en suspension dans l'eau de manière à obtenir une suspension à 30 % d'extrait sec.

Cette suspension est décationisée par passage, par exemple, dans une cuve contenant une résine échangeuse de cations, qui fixe les ions calcium et libère des ions sodium. Cette opération se fait au pH du fromage (environ 5,5) et à la température ambiante (environ 20°C). Après séparation de la résine et de la suspension décalcifiée, la suspension est alors concentrée, puis réengraissée avec de la matière grasse lactique anhydre, par exemple, pour donner un produit ayant les caractéristiques suivantes :

- % d'extrait sec : 61,15
- % de gras sec : 48,25
- mg de calcium/100 g : 36

Comme on l'a précédemment indiqué dans le cas de la fabrication classique, on indique dans le tableau III ci-après les caractéristiques des matières premières de base :

TABLEAU III

| | % d'extrait sec | % de MG | % de gras/ sec | mg de calcium/100 g |
|---|---|---|---|---|
| Cheddar décalcifié | 61,15 | 29,50 | 48,25 | 36 |
| Beurre | 82,50 | 82,50 | 100 | - |

Une fabrication de fromage fondu est réalisée, en préparant le mélange indiqué dans le tableau IV suivant :

TABLEAU IV

| | Quantité kg | kg de matière sèche | kg de MG | g de calcium/100 g |
|---|---|---|---|---|
| Cheddar décalcifié | 93 | 56,87 | 27,44 | 33,5 |
| Beurre | 7 | 5,78 | 5,78 | - |
| Mélange | 100 | 62,65 | 33,22 | 33,5 |

A ce mélange, sont ajoutés 18,5 kg d'eau, puis une fonte est faite, ce qui donne un produit fini ayant les caractéristiques suivantes :

- % d'extrait sec : 52,9
- % de gras/sec : 53

Les caractéristiques organoleptiques de ce fromage fondu sans polyphosphates, sont tout à fait comparables à celle d'un fromage fondu classique.

Il est possible aussi de faire des mélanges de cheddars classique et décalcifié et d'ajouter des sels de fonte en quantités inversement proportionnelles à celles de cheddar décalcifié.

La présente invention n'est pas limitée aux exemples de réalisation qui viennent d'être décrits, elle est au contraire susceptible de variantes et de modifications qui apparaîtront à l'homme de l'art.

REVENDICATIONS

1 - Procédé de préparation de produits laitiers, destinés à la fabrication de fromages fondus, caractérisé en ce qu'on soumet des matières premières à un échange d'ions pour abaisser leur concentration en cations divalents, ces cations divalents étant remplacés par des cations monovalents.

2 - Procédé selon la revendication 1, caractérisé en ce que le cation divalent est le calcium.

3 - Procédé selon la revendication 1 ou la revendication 2, caractérisé en ce que les matières premières sont choisies dans le groupe se composant de lait entier, de lait écrémé, de lactosérum, de babeurre, de caillés frais, de fromage, de concentrés protéiques du lait et du lactosérum, de caséines, de caséinates, de coprécipités, de lactoprotéines et de tout autre produit laitier servant à la préparation des produits précédents.

4 - Procédé selon l'une quelconque des revendications 1 à 3, caractérisé en ce que les matières premières sont sous forme liquide ou en poudre.

5 - Procédé selon la revendication 3, caractérisé en ce que les concentrés protéiques sont obtenus par traitement thermique, ultrafiltration, chromatographie préparative, dialyse et tout autre procédé de concentration.

6 - Procédé selon l'une quelconque des revendications 1 à 5, caractérisé en ce que le traitement d'abaissement de la concentration en ions divalents s'effectue par un échange d'ions $K^+$, $Na^+$, $NH_4^+$ ou $H^+$.

7 - Procédé selon l'une quelconque des revendications 1 à 6, caractérisé en ce que l'échange d'ions est réalisé en continu ou en discontinu.

8 - Procédé selon la revendication 7, caractérisé en ce que l'échange d'ions est réalisé en continu ou en discontinu par percolation de la matière première sur une colonne contenant une résine échangeuse de cations.

9 - Procédé selon la revendication 8, caractérisé en ce que l'échange d'ions est réalisé sous pression.

10 - Procédé selon la revendication 7, caractérisé en ce que l'échange d'ions est réalisé en discontinu dans une cuve contenant une résine, dans des conditions de température et de pH souhaitées.

11 - Procédé selon la revendication 10, caractérisé en ce que l'échange d'ions est réalisé dans un intervalle de températures

d'environ 2 à 99 °C et à un pH d'environ 1 à 14.

12 - Procédé selon la revendication 11, caractérisé en ce que l'échange d'ions est réalisé à un pH d'environ 1 à 10.

13 - Procédé selon l'une quelconque des revendications 1 à 12, caractérisé en ce qu'on réduit la teneur en calcium jusqu'à une teneur résiduelle égale ou inférieure à environ 1 %.

14 - Procédé selon l'une quelconque des revendications 1 à 13, caractérisé en ce que les produits à décalcifier contiennent un extrait sec allant jusqu'à environ 50 %.

15 - Produits laitiers à teneur réduite en cations divalents, obtenus par le procédé selon l'une quelconque des revendications 1 à 14.

16 - Produits laitiers selon la revendication 15, caractérisés en ce qu'on les introduit, lors de la fabrication de fromages fondus, pour abaisser ou supprimer l'addition de sels de fonte.

Office européen des brevets

# RAPPORT DE RECHERCHE EUROPEENNE

Numero de la demande
EP 79 40 0618

## DOCUMENTS CONSIDERES COMME PERTINENTS

| Catégorie | Citation du document avec indication, en cas de besoin, des parties pertinentes | Revendication concernee |
|---|---|---|
| X | US - A - 2 503 866 (L. CHRYSLER et al.)<br>* Revendication 1; colonne 13, lignes 39-59; exemples * | 1-4,6-9,11,12,14-16 |
| D | FR - A - 1 188 466 (FISONS MILK PRODUCTS)<br>* Résumé 1; page 2, colonne 1, exemples * | 1-4,6-9,11-15 |
| | US - A - 2 225 506 (H. OTTING)<br>* Revendications 1-3; page 1, colonne 2, lignes 20-50; page 2, colonne 1, ligne 8 - page 3, colonne 1, ligne 8 * | 1-4, 6-15 |
| A | FR - A - 2 080 830 (J. GOBELT et al.) | |

CLASSEMENT DE LA DEMANDE (Int. Cl. ³)

A 23 C 19/08
9/146

DOMAINES TECHNIQUES RECHERCHES (Int. Cl. ³)

A 23 C 19/08
19/082
19/084
9/146
A 23 J 1/20
A 23 C 19/05

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interference
D: document cité dans la demande
L: document cite pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-06-1980 | DESMEDT |